# EUROPEAN PATENT APPLICATION

(11) **EP 3 059 658 A1**
(43) Date of publication of application: **24.08.2016**
(21) Application number: 15155496.1
(22) Date of filing: 18.02.2015
(51) Int. Cl.: G06F 3/01, G06F 1/32, H04N 13/04

(54) **Apparatus, methods and computer programs for providing images**

(71) Applicant: Nokia Technologies OY, 02610 Espoo (FI)
(72) Inventor: Järvenpää, Toni, 37800 Akaa (FI); Piippo, Petri, 33960 Pirkkala (FI); Eskolin, Jan, 37500 Lempäälä (FI); Salmimaa, Marja, 33610 Tampere (FI)
(74) Representative: Nokia Corporation

(57) **Abstract**

An apparatus, method and computer program wherein the apparatus comprises: processing circuitry; and memory circuitry including computer program code, the memory circuitry and the computer program code configured to, with the processing circuitry, enable the apparatus to perform; detecting whether or not a user is viewing an external display area or an internal display area; controlling an image source to provide images for the internal display area in response to detecting that a user is viewing the internal display area: and controlling an image source to provide images for the external display area in response to detecting that a user is viewing the external display area.

## Description

### TECHNOLOGICAL FIELD

Examples of the disclosure relate to apparatus, methods and computer programs for providing images. In particular, examples of the disclosure relate to apparatus, methods and computer programs for providing images in a device such as a near eye display.

### BACKGROUND

Devices such as near eye displays are known. Such devices enable images from image sources such as displays or scanners to be provided proximate to an eye of a user. Such devices may be used to implement virtual or augmented reality applications.

In such devices it is useful to ensure that the images are provided efficiently.

### BRIEF SUMMARY

According to various, but not necessarily all examples of the disclosure there may be provided an apparatus comprising: processing circuitry; and memory circuitry including computer program code, the memory circuitry and the computer program code configured to, with the processing circuitry, enable the apparatus to perform; detecting whether or not a user is viewing an external display area or an internal display area; controlling an image source to provide images for the internal display area in response to detecting that a user is viewing the internal display area: and controlling an image source to provide images for the external display area in response to detecting that a user is viewing the external display area.

In some examples the internal display area may be configured to be positioned proximate to an eye of a user and the external display area may be configured to be positioned on an opposing side of the apparatus to the internal display area.

In some examples the processing circuitry and the memory circuitry may be configured to control an image source to provide images in a first format for the internal display area and a second format for the external display area.

In some examples the processing circuitry and the memory circuitry may be configured to control an image source to provide images in a first orientation for display on the internal display area and a second orientation for display on the external display area.

In some examples the processing circuitry and the memory circuitry may be configured to control an image source to provide images with a first convergence point for display on the internal display area and a second convergence point for display on the external display area.

In some examples the processing circuitry and the memory circuitry may be configured to control a first image source to provide first images for the internal display area and to control a second image source to provide second images for the external display area.

In some examples the image which is displayed in the external display area may be displayed in a low energy mode.

In some examples the processing circuitry and the memory circuitry may be configured to obtain user input signals and control the images provided by the image sources in response to the obtained user input signals.

According to various, but not necessarily all examples of the disclosure there may be provided a near eye display comprising an apparatus as described above.

According to various, but not necessarily all examples of the disclosure there may be provided a method comprising: detecting whether or not a user is viewing an external display area or an internal display area; controlling an image source to provide images for the internal display area in response to detecting that a user is viewing the internal display area: and controlling an image source to provide images for the external display area in response to detecting that a user is viewing the external display area.

In some examples the internal display area may be configured to be positioned proximate to an eye of a user and the external display area is configured to be positioned on an opposing side of an apparatus to the internal display area.

In some examples the method may further comprise controlling an image source to provide images in a first format for the internal display area and a second format for the external display area.

In some examples the method may further comprise controlling an image source to provide images in a first orientation for display on the internal display area and a second orientation for display on the external display area.

In some examples the method may further comprise controlling an image source to provide images with a first convergence point for display on the internal display area and a second convergence point for display on the external display area.

In some examples the method may further comprise controlling a first image source to provide first images for the internal display area and to controlling a second image source to provide second images for the external display area.

In some examples the image which is displayed in the external display area may be displayed in a low energy mode.

In some examples the method may further comprise obtaining user input signals and controlling the images provided by the image sources in response to the obtained user input signals.

According to various, but not necessarily all examples of the disclosure there may be provided a computer program comprising computer program instructions that, when executed by processing circuitry, enable: detecting whether or not a user is viewing an external display area or an internal display area; controlling an image source to provide images for the internal display area in response to detecting that a user is viewing the internal display area: and controlling an image source to provide images for the external display area in response to detecting that a user is viewing the external display area.

According to various, but not necessarily all examples of the disclosure there may be provided a computer program comprising program instructions for causing a computer to perform methods as described above.

According to various, but not necessarily all examples of the disclosure there may be provided a physical entity embodying computer programs as described above.

According to various, but not necessarily all examples of the disclosure there may be provided an electromagnetic carrier signal carrying the computer program as described above.

According to various, but not necessarily all examples of the disclosure there may be provided an apparatus comprising: at least one image source; an internal display area configured to be positioned proximate to an eye of a user; an external display area configured to be positioned on an opposing side of the apparatus to the internal display area; at least one optical projection element configured to enable images from the at least one image source to be displayed on the internal display area and the external display area; and one or more detectors configured to detect whether or not a user is viewing the external display area wherein the at least one image source is configured to provide images for the external display area in response to detection of a user viewing the external display area.

In some examples the apparatus may comprise one or more detectors configured to detect whether or not a user is viewing the internal display area wherein the at least one optical projection element is controlled to display images on the internal display area in response to detection of a user viewing the internal display area.

In some examples the apparatus may comprise a first optical projection element configured to enable images from the first image source to be displayed on the internal display area and a second optical projection element configured to enable images from the second image source to be displayed on the external display area.

According to various, but not necessarily all, examples of the disclosure there may be provided examples as claimed in the appended claims.

### BRIEF DESCRIPTION

For a better understanding of various examples that are useful for understanding the detailed description, reference will now be made by way of example only to the accompanying drawings in which:
Fig. 1 illustrates an apparatus;
Fig. 2 illustrates a device such as a near eye display;
Fig. 3 illustrates an example method;
Fig. 4 illustrates an example device in use;
Figs. 5A and 5B illustrate an example device in use;
Figs. 6A to 6D illustrate an example device;
Figs. 7A to 7C illustrate an example device;
Figs. 8A to 8C illustrate an example device;
Figs. 9A to 9C illustrate an example device; and
Figs. 10A and 10B illustrate an example device.

### DETAILED DESCRIPTION

The Figures illustrate an apparatus 1 comprising: processing circuitry 5; and memory circuitry 7 including computer program code 11, the memory circuitry 7 and the computer program code 11 configured to, with the processing circuitry 5, enable the apparatus 1 to perform; detecting whether or not a user is viewing an external display area 25 or an internal display area 24; controlling an image source 23 to provide images for the internal display area 24 in response to detecting that a user is viewing the internal display area 24: and controlling an image source 23 to provide images for the external display area 25 in response to detecting that a user is viewing the external display area 25.

The apparatus 1 may be for providing images. The apparatus 1 may be for controlling an electronic device such as a near eye display 21.

Examples of the disclosure provide for apparatus 1, methods and computer programs which enable efficient control of a device such as a near eye display 21. The near eye display 21 may be configured to provide images to the internal display area 24 if the user is wearing the near eye display 21. The apparatus 1 may also be configured to provide images to the external display area 25 if the user is not wearing the near eye display 21. This may enable the user to quickly obtain information from the near eye display 21. In some examples the apparatus 1 may be configured to provide images to the external display area 25 if another user is looking at the user wearing the near eye display 21. This may make use of light which is leaked from the internal display area 24 and may improve the efficiency of the near eye display 21.

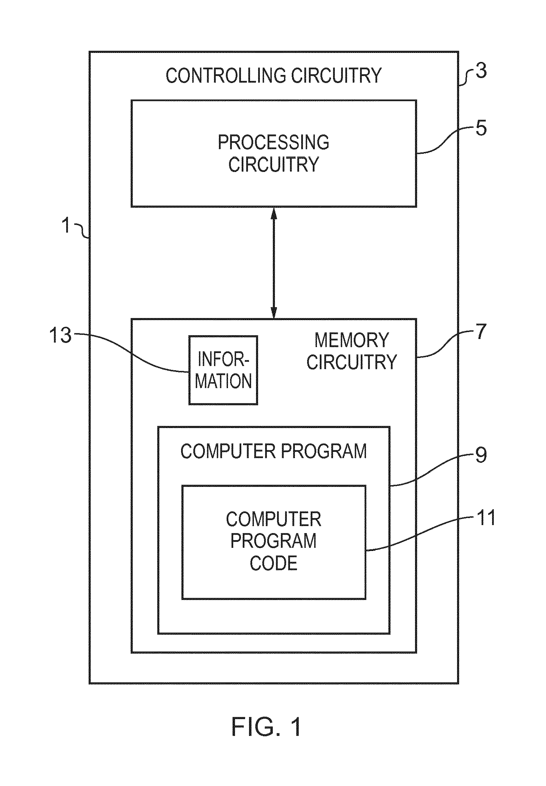

Fig. 1 schematically illustrates an example apparatus 1 which may be used in implementations of the disclosure. The example apparatus 1 of Fig. 1 may be a chip or a chip-set. In some examples the apparatus 1 may be provided within an electronic device such as a near eye display 21 or within any other suitable device.

The example apparatus 1 comprises controlling circuitry 3. Where the apparatus 1 is provided within a device such as a near eye display 21 the controlling circuitry 3 may enable control of the functions of the near eye display 21, for example, it may control the images which are provided on the display areas 24, 25.

The controlling circuitry 3 may comprise one or more controllers. The controlling circuitry 3 may be implemented using instructions that enable hardware functionality, for example, by using executable computer program instructions in a general-purpose or special-purpose processing circuitry 5 that may be stored on a computer readable storage medium (disk, memory etc) to be executed by such processing circuitry 5.

The processing circuitry 5 may be configured to read from and write to memory circuitry 7. The processing circuitry 5 may comprise one or more processors. The processing circuitry 5 may also comprise an output interface via which data and/or commands are output by the processing circuitry 5 and an input interface via which data and/or commands are input to the processing circuitry 5.

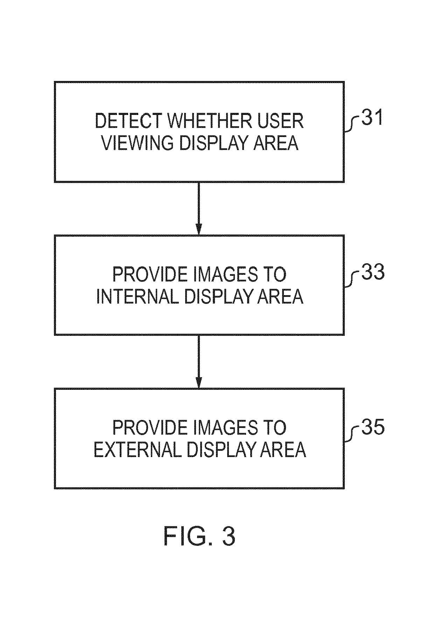

The memory circuitry 7 may be configured to store a computer program 9 comprising computer program instructions (computer program code 11) that controls the operation of the apparatus 1 when loaded into processing circuitry 5. The computer program instructions, of the computer program 9, provide the logic and routines that enables the apparatus 1 to perform the example methods illustrated in Fig. 3. The processing circuitry 5 by reading the memory circuitry 7 is able to load and execute the computer program 9.

In the example apparatus 1 of Fig. 1 information 13 may be stored in the memory circuitry 7. The information 13 may be retrieved from the memory circuitry 7 and used by the processing circuitry 5 in some of the examples of the disclosure. In some examples the apparatus 1 may be configured to enable the information 13 to be displayed to a user. The apparatus 1 may be configured to provide the information 13 to an image source to enable images to be displayed on one or more display areas 24, 25.

The apparatus 1 therefore comprises: processing circuitry 5; and memory circuitry 7 including computer program code 11, the memory circuitry 7 and the computer program code 11 configured to, with the processing circuitry 5, enable the apparatus 1 to perform; detecting whether or not a user is viewing an external display area 25 or an internal display area 24; controlling an image source 23 to provide images for the internal display area 24 in response to detecting that a user is viewing the internal display area 24: and controlling an image source 23 to provide images for the external display area 25 in response to detecting that a user is viewing the external display area 25.

The computer program 9 may arrive at the apparatus 1 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program. The delivery mechanism may be a signal configured to reliably transfer the computer program 9. The apparatus 1 may propagate or transmit the computer program 9 as a computer data signal.

Although the memory circuitry 7 is illustrated as a single component in the figures it is to be appreciated that it may be implemented as one or more separate components some or all of which may be integrated/removable and/or may provide permanent/semi-permanent/ dynamic/cached storage.

Although the processing circuitry 5 is illustrated as a single component in the figures it is to be appreciated that it may be implemented as one or more separate components some or all of which may be integrated/removable.

References to "computer-readable storage medium", "computer program product", "tangibly embodied computer program" etc. or a "controller", "computer", "processor" etc. should be understood to encompass not only computers having different architectures such as single/multi- processor architectures and sequential (Von Neumann)/parallel architectures but also specialized circuits such as field-programmable gate arrays (FPGA), application specific integrated circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

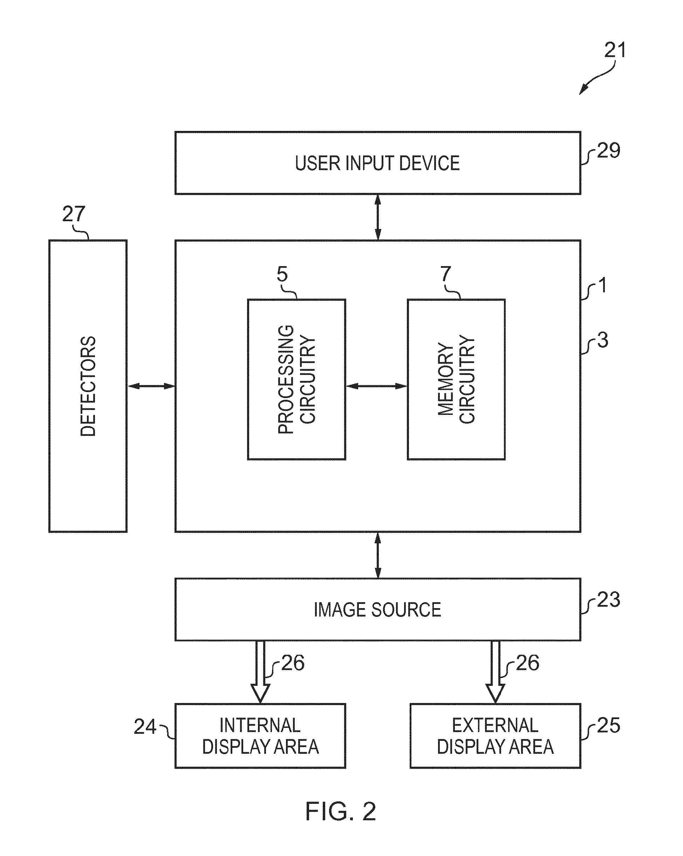

Fig. 2 schematically illustrates an electronic device comprising an apparatus 1 as described above. The example electronic device could be a device such as a near eye display 21 or other device which enables images to be provided to a user. Corresponding reference numerals have been used for corresponding features.

The example electronic device 21 comprises controlling circuitry 3, at least one image source 23, an internal display area 24, an external display area 25, optical projection elements 26, at least one detector 27 and a user input device 29.

The controlling circuitry 3 may comprise processing circuitry 5 and memory circuitry 7 as described above. Information 13 and computer program code 11 may be stored in the memory circuitry 7. The controlling circuitry 3 may be configured to control the image source 23 to control the images that are provided by the image source 23. The controlling circuitry 3 may also be configured to receive inputs from the detectors 27 and/or the user input device 29. The controlling circuitry 3 may enable inputs from the detectors 27 and the user input device 29 to be used to control the images provided by the image source 23.

The image source 23 may comprise any means which may generate an image. The image source 23 may comprise a display or a scanner or any other suitable means.

The image source 23 may be configured to provide images for the internal display area 24. The image source 23 may also be configured to provide images for the external display area 25. In some examples at least one optical projection element 26 may be configured to project images from the image source 23 onto the internal display area 24. In some examples the optical projection element 26 may also be configured to enable images from the image source 23 to be projected onto the external display area 25. In some examples the same optical projection element 26 may project images to both the display areas 24, 25. In other examples a first optical projection element 26 may be configured to project an image to the internal display area 24 and a second optical projection element 26 may be configured to project an image to the external display area 25.

In some examples one or more light guides may be provided between the image source 23 and the optical projection elements 26. The light guides may comprise any means which may enable light provided by the image source 23 to be transferred to the optical projection elements 26. The optical projection elements 26 may then enable the images to be projected onto the display areas 24, 25.

In the example of Fig. 2 only one image source 23 is illustrated. The image source 23 in Fig. 2 is configured to provide images to both the internal display area 24 and the external display area 25.

In other examples the near eye display 21 may comprise a first image source 23 which may be configured to provide images to the internal display area 24 and a second image source 23 which may be configured to provide images to the external display area 25. This may enable different images to be displayed on the internal display area 24 and the external display area 25.

The internal display area 24 may comprise a surface of the near eye display 21 onto which images may be projected by the optical projection element 26. This may enable images to be viewed by the user. The internal display area 24 may be configured so that when the near eye display 21 is worn by the user the internal display area 24 may be positioned proximate to the eye of the user.

In some examples the internal display area 24 may comprise a first portion which is configured to be positioned adjacent to the right eye of the user and a second portion which is configured to be positioned adjacent to the left eye of the user. In some examples the same image source 23 may be configured to provide images to each portion of the internal display area 24. In other examples a separate image source 23 may be provided for each portion of the internal display area 24. For instance a first image source 23 may be configured to provide images to the right eye of the user and a second image source 23 may be configured to provide images to the left eye of the user.

The external display area 25 may comprise another surface of the near eye display 21 onto which images may be projected by an optical projection element 26. This may enable images to be viewed by a user looking at the external display area 25. The external display area 25 may be configured to be positioned on an opposing side of the near eye display 21to the internal display area 24. The near eye display 21 may be configured to so that when the user is wearing the near eye display 21 the internal display area 24 faces inwards towards the face of the user while the external display area 25 faces outwards away from the face of the user.

As with the internal display area 24, the external display area 25 may comprise two portions. The external display area 25 may also comprise a first portion which may be configured to be positioned adjacent to the right eye of the user and a second portion which may be configured to be positioned adjacent to the left eye of the user. In some examples the same image source 23 may be configured to provide images to each portion of the external display area 25. In other examples a separate image source 23 may be provided for each portion of the external display area 25. For instance a first image source 23 may be configured to provide images to the right hand portion of the external display area 25 and a second image source 23 may be configured to provide images to the left hand portion of the external display area 25.

The near eye display 21 may also comprise one or more detectors 27. The detectors 27 may comprise any means which may be configured to detect whether or not a user is viewing an internal display area 24 and/or an external display area 25. The processing circuitry 5 may be configured to receive information from the one or more detectors 27 and may use the information to determine whether or not the user is viewing an internal display area 24 and/or an external display area 25.

In some examples the detectors 27 may comprise one or more imaging devices. The imaging devices may be configured to capture images and use the captured images to determine whether or not a user is looking at an internal display area 24 or an external display area 25.

In some examples the detectors 27 may comprise means for detecting a status of the near eye display 21. For instance it may be configured to detect that the near eye display 21 has been attached to a power source for charging. In such examples this may be used to determine that the near eye display 21 is not currently being worn by the user. This may provide context information which may be useful to determine whether or not a user is looking at the internal display area 24 and/or the external display area 25. Such context information could also be used to determine the images that area provided by the image source 23.

The user input device 29 may comprise any means which enables a user to input information into the near eye display 21 and control the near eye display 21. In some examples the user input device 29 may comprise means for detecting a user touching and/or bending part of the near eye display 21. For example, the user input device may detect a user bending or touching part of the near eye display 21. In some examples the user input device 29 may comprise a gesture detector which may be configured to detect movements of the user. The gesture detector may comprise any means which may be configured to detect and identify specific movements of the user and enable the identified movements to be used control the near eye display 21. Other user input devices 29 could be used in other examples, for instance, a microphone may be configured to enable audio control inputs.

It is to be appreciated that the near eye display 21 may comprise other features which are not illustrated in Fig. 2. For example the near eye display 21 may comprise a mounting portion such as a head piece. The mounting portion may enable the near eye display 21 to be mounted on the head or face of the user. When the near eye display 21 is mounted on the head or face of the user, the user's head or face may support the weight or at least a portion of the weight of the near eye display 21. The mounting portion may enable the internal display area 24 to be positioned proximate to an eye of the user. The mounting portion may comprise a frame with ear pieces which may enable the near eye display 21 to be worn in the manner of glasses.

Fig. 3 illustrates an example method. The method may be implemented using apparatus 1 and devices such as near eye displays 21 as described above.

The method comprises detecting, at block 31, whether or not a user is viewing an external display area 25 or an internal display area 24. The method also comprises at block 33 controlling an image source 23 to provide images for the internal display area 24 in response to detecting that a user is viewing the internal display area 24. The method also comprises, at block 35, controlling an image source 23 to provide images for the external display area 25 in response to detecting that a user is viewing the external display area 25.

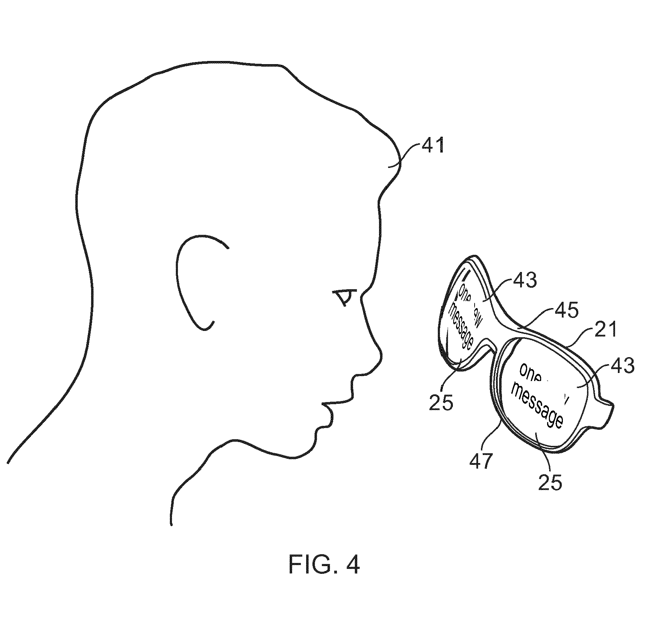

Figs. 4 to 10B illustrate examples of the methods and apparatus 1 and near eye displays 21 in more detail.

Fig. 4 illustrates a user 41 viewing an external display area 25 of a near eye display 21. The near eye display 21 may be as described above. It is to be appreciated that components of the near eye display 21 such as the controlling circuitry 3 may be provided within the near eye display 21 and so are not illustrated in Fig. 4 which shows the electronic device 21 in use.

In the example of Fig. 4 the near eye display 21 is configured to be worn as a pair of glasses. The example near eye display 21 of Fig. 4 comprises a frame 45. The frame 45 comprises ear pieces and a front frame 47. The ear pieces may enable the near eye display 21 to be mounted to the head of the user 41. The front frame 47 may be configured to be positioned close to the eyes of the user 41 when the user 41 wears the near eye display 21. The front frame 47 may comprise an internal display area 24 and an external display area 25. In the example of Fig. 4 the user is not wearing the near eye display 21 and so the ear pieces may be folded behind the front frame 47.

In the example of Fig. 4 only the external display area 25 is illustrated. It is to be appreciated that the internal display areas 24 would be provided on the opposing side of the near eye display 21. The internal display areas 24 would be provided so that they can be viewed by the user 41 when they are wearing the near eye display 21.

In the example of Fig. 4 the external display area 25 comprises two portions. A first portion is positioned on the right hand side of the near eye display 21 and a second portion is positioned on a left hand side of the near eye display 21. The external display area 25 is provided in positions that lenses would be provided in a pair of glasses.

In the example of Fig. 4 the user 41 is not wearing the near eye display 21. The user 41 is positioned so that the user can view the external surface of the near eye display 21. One or more detectors 27 may detect that the user 41 is viewing the external display area 25. The detectors 27 may also be configured to detect that the user 41 is not viewing the internal display area 24.

In response to detecting that the user 41 is viewing the external display area 25 the controlling circuitry 3 may control the image source 23 to provide images 43 for the external display area as illustrated in Fig. 4.

In the example of Fig. 4 an image 43 is provided in each portion of the external display area 25. In the example of Fig. 4 the image 43 comprises information relating to messages which may have been received by the near eye display 21. It is to be appreciated that other information and images 43 may be provided in other examples of the disclosure.

In some examples the controlling circuitry 3 may be configured so that the images 43 which may be provided on the external display area 25 are different to images 43 which may be provided on the internal display area 24.

In some examples the images which are provided on the internal display area 24 may relate to different information compared to the images which are displayed on the external display area 25. The controlling circuitry 3 may control the images which are displayed on the external display area 25 so that only limited information may be displayed on the external display area 25. For instance, any information 13 which may be stored in the memory circuitry 7 may be displayed on the internal display area 24 as this can only be viewed by the user 41 of the near eye display 21 when they are wearing the electronic device. However only restricted information, such as whether or not a message has been received or the time or the power status of the near eye display 21 or other suitable information might be displayed on the external display area 25 as this could be viewed by other users. This may ensure that personal information can only be viewed by the user of the near eye display 21.

In some examples the image source 23 may be controlled to provide images in a first format for the internal display area 24 and a second format for the external display area 25. For instance in some examples the image source 23 may be controlled to provide images in a first orientation for display on the internal display area 24 and a second orientation for display on the external display area 25. This may ensure that the image is in the correct orientation for the user 41 when they view the image from either display area 24, 25.

In some examples the image 43 provided for the external display area 25 may be displayed in a low energy mode. In the low energy mode the images 43 may be displayed on the external display area 25 in a manner which reduces the power requirements compared to the display of images 43 on the internal display area 24. For instance, the images may be displayed monochromatically, in a smaller field of view, with a lower refresh rate or in any other reduced energy manner.

In some examples the brightness of the images 43 provided for the external display area 25 may be adjusted to take into account the ambient light levels. In such examples a photodetector may be configured to measure the current light levels. This may be useful when the user is viewing the external display area 25 as the user 41 could be blocking any ambient light source.

The example of Fig. 4 enables a user 41 who is not currently wearing the near eye display 21 to obtain information from the electronic device in response to glancing at the near eye display 21. This may be useful to the user 41 at it means that they do not have to put the near eye display 21 on if they wish to check something, such as the time or whether or not a message has been received. This may make the near eye display 21 convenient for the user 41 to use.

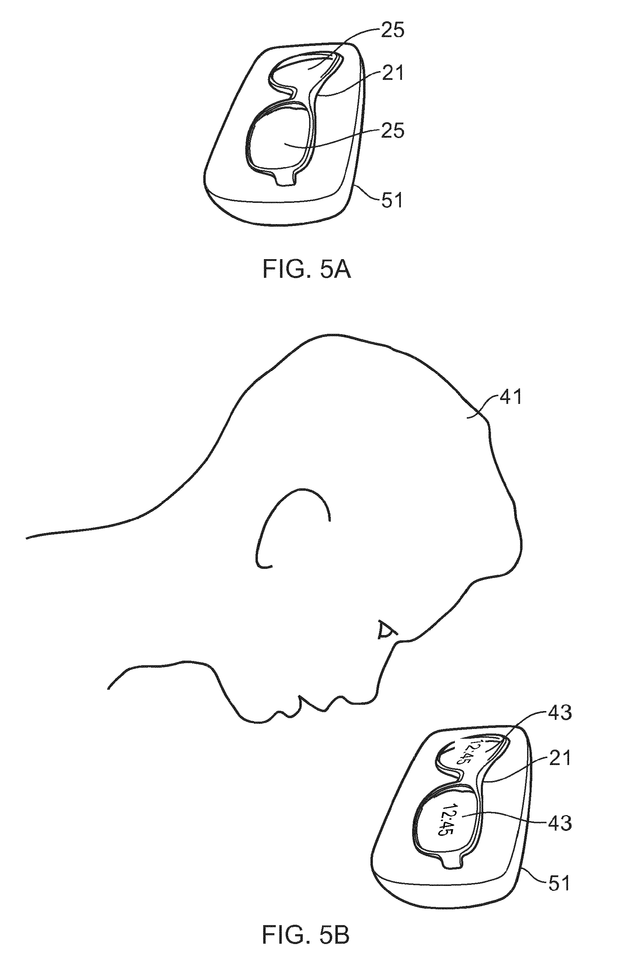

Figs. 5A and 5B illustrate another example near eye display 21 in use. The example near eye display 21 of Figs. 5A and 5B is similar to the example near eye display 21 of Fig. 4. Corresponding reference numerals have been used for corresponding features.

In Fig. 5A the user is not wearing the near eye display 21. In Fig. 5A the near eye display 21 is connected to a power source for charging. In the example of Fig. 5A the near eye display 21 is positioned on a wireless charger 51. The near eye display 21 is positioned within the wireless charger 51 so that a user 41 can view the external display area 25 but not the internal display area 24.

In Fig. 5A no user 41 is detected and the near eye display 21 is configured in a standby mode. In the standby mode no images are displayed on either the internal display area 24 or the external display area 25. The standby mode may be a low energy mode of operation.

When the near eye display 21 is in the standby mode one or more detectors 27 may still be configured to detect whether or not a user 41 glances at the near eye display 21.

In the example of Fig. 5B the detectors 27 have detected that a user 41 is glancing at the near eye display 21. For instance a positioning detector may detect that the user 41 is close to the near eye display 21 and/or an imaging device may detect that the user 41 is viewing the external display area 25.

The near eye display 21 may be configured so that, in response to detecting that the user 41 is viewing the external display area 25 the near eye display 21 exits the standby mode and enters a display mode of operation. In the display mode of operation images 43 are displayed on the external display area 25 so that they can be viewed by the user 41 while the near eye display 21 remains positioned within the wireless charger 51.

In the example of Fig. 5B the image 43 which is displayed on the external display area 25 comprises an indication of the current time. It is to be appreciated that any other suitable images may be displayed in other examples of the disclosure.

In some examples the position of the near eye display 21 may be used to provide context information which may be used to control the images that are displayed and/or the display areas 24, 25 that are used to display the images. For instance if it is determined that the near eye display 21 is positioned within a wireless charger 51 then it can be determined that the user 41 is not wearing the near eye display 21 and so images do not need to be provided for the internal display area 24.

Such examples provide the user 41 with a convenient way of viewing information from the near eye display 21 as they do not need to remove the near eye display 21 from the wireless charger 51 in order to view the information. Also the near eye display 21 can detect when the user 41 is looking at the external display area 25 and so the user 41 does not need to make a specific user input to cause the near eye display 21 to exit the standby mode of operation.

In the examples of Figs. 4 and 5B the same images 43 are displayed on each portion of the external display area 25. These images 43 may be provided by the same image source 23 or by different image sources 23. It is to be appreciated that in other examples different images may be provided in each portion of the external display area 25. For instance, a first image source 23 may be configured to provide images to the right hand side of the of the external display area 25 and a second image source 23 may be configured to provide different images to the left hand side of the external display area 25.

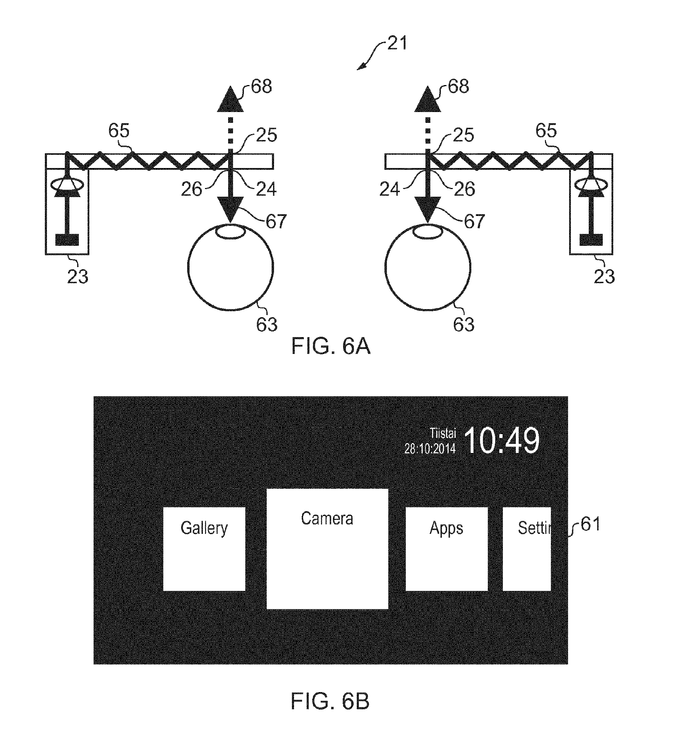

Figs. 6A to 6D illustrate an example near eye display 21 and the images 61 which may be provided by the image source 23 and viewed by the user 41.

Fig. 6A schematically illustrates components of a near eye display 21 which may be used in some examples of the disclosure. The near eye display 21 may comprise image sources 23, internal display areas 24, external display areas 25, and optical projection elements 26 which may be as described above.

In the example of Fig. 6A the internal display area 24 comprises two portions, one for each eye 63 of the user 41. The external display area 25 also comprises two portions; one corresponding to each internal display area 24. The external display area 25 is provided on an opposing side of the near eye display 21 to the internal display area 24.

In the example of Fig. 6A two image sources 23 are provided, one for each portion of the internal display area 24. This may enable the images that are provided to the right eye to be controlled independently of the images that are provided to the left eye. In some examples only a single image source 23 may be provided. The single image source 23 may be configured to provide the same image for both the right and left eyes.

The example near eye display 21 of Fig. 6A comprises light guides 65 between the image sources 23 and the optical projection elements 26. The light guides 65 may comprise any means which may be configured to guide a light beam from the image source 23 to a position proximate to the eye 63 of the user 41. The light guides 65 may be coupled to the optical projection elements 26. The optical projection elements 26 may be configured to enable the images to be projected onto the internal display area 24 as indicated by arrow 67. This may enable a user wearing the near eye display 21 to view an image provided by the image source 23 on the internal display area 24. As the optical components are not completely efficient some light may leak from the optical projection elements 26 and the light guide 65 as indicated by arrow 68. This may enable the optical projection element 26 to be used to project images to both the internal display area 24 and the external display area 25. This may enable the image from the image source 23 which is intended for the internal display area 24 to also be visible on the external display area 25.

Fig. 6B illustrates an example of an image 61 which may be provided for the internal display areas 24 by the image source 23. The image 61 comprises a list of applications which may be selected by the user of the near eye display 21. The near eye display 21 may be configured enable a user to use the user input device 29 to select applications from the list in the image 61.

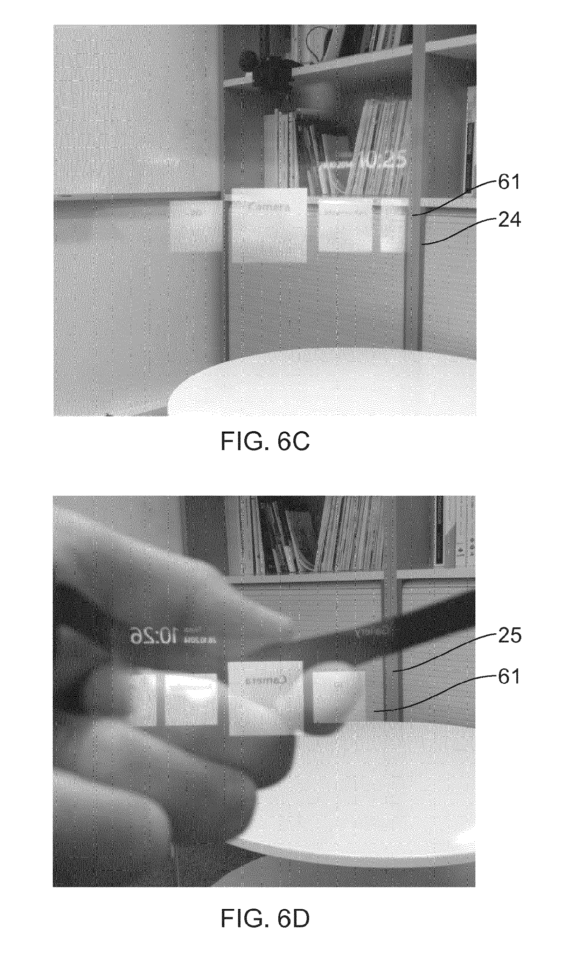

The image 61 may be provided as an augmented or virtual provided image. Fig. 6C illustrates how the image 61 may appear to the user of the near eye display 21 when they are wearing the near eye display 21. This illustrates how the image 61 may appear on the internal display area 24. In this example the image 61 may be provided as an augmented reality image so the images provided by the image source 23 appear to be overlaying real world objects.

Fig. 6D illustrates how the image 61 may appear to the user of the near eye display 21 when they are not wearing the near eye display 21. This illustrates how the image 61 may appear on the external display area 25. In this example the image 61 appears inverted so that it appears back to front to the user viewing the external display area 25. The image 61 in the external display area 25 appears as a 180 degree rotation of the image 61 which is provided by the image source 23. The image 61 may be visible on the external display area 25 due to light which has leaked from the optical components such as the light guide 65 and the optical projection element 26.

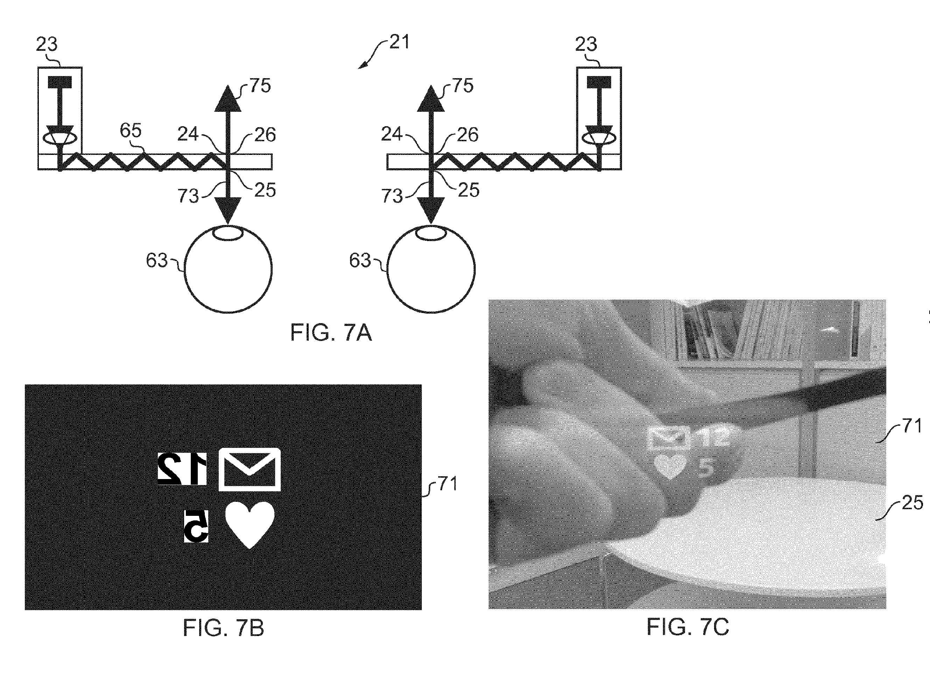

Figs. 7A to 7C illustrate another example near eye display 21 and the images 71 which may be provided by the image source 23 and viewed by the user 41. Figs. 7A to 7C illustrate how the leakage of light from the optical components may be used to provide an efficient near eye display 21.

Fig. 7A schematically illustrates components of a near eye display 21 which may be used in some examples of the disclosure. The near eye display 21 may be the same as the near eye display 21 of Fig. 6A. Corresponding reference numerals are used for corresponding features.

In the example of Fig. 7A the user 41 may be viewing the external display area 25. This may be detected by one or more detectors 27. In response to detecting that the user 41 is viewing the external display area 25 the image source 23 may be configured to provide an image 71 for the external display area 25.

In some examples when the images 71 are provided for the external display area 25 the optical components may be configured so that a larger proportion of light is provided to the external display area 25. The proportion of light provided to the external display area 25 may be larger compared to the proportion of light which is leaked to the external display area 25 when the user is viewing the internal display area 24 as indicated by arrow 73. It is to be appreciated that as the optical components are not completely efficient some light may leak to the internal display area 24 as indicated by the arrow 75.

Fig. 7B illustrates an example of an image 71 which may be provided for the external display areas 25 by the image source 23. The image 71 comprises a notification of messages received by the electronic device 21. In Fig. 7B the image 71 provided by the image source is rotated horizontally so that it appears backwards when provided by the image source 23.

Fig. 7C illustrates how the image 71 may appear to a user of the near eye display 21 when they are viewing the external display area 25. In this example the image 71 appears the right way round in the external display area 25 because this displays a 180 degree rotation of the image 71 provided by the image source 23. It is to be appreciated that the image 71 would appear back to front in the internal display area 24.

The examples of Figs. 7A to 7C enable the image which is provided by the image source 23 to be formatted so that it is suitable for viewing on the external display area. In the example of Figs. 7A to 7C the formatting comprises the rotation of the image 71. In other examples it could comprise modifying the colour of the image 71, the refresh rate of the image 71, the portion of the external display area 25 in which the image 71 is displayed or any other suitable feature.

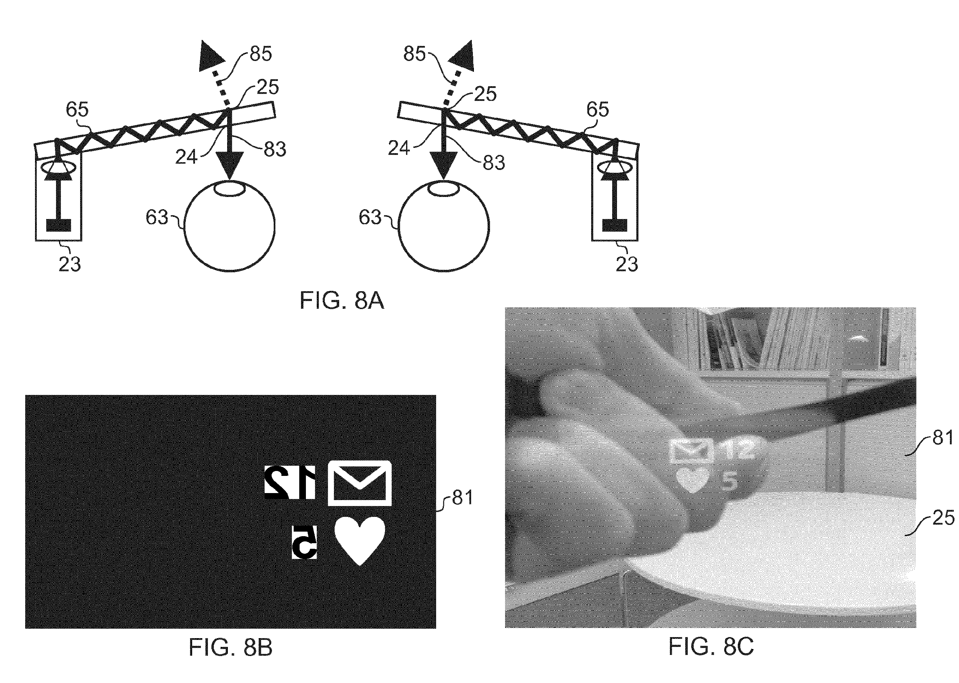

Figs. 8A to 8C illustrate another example near eye display 21 and the images 81 which may be provided by the image source 23 and viewed by the user 41.

Fig. 8A schematically illustrates components of a near eye display 21 which may be used in some examples of the disclosure. The near eye display 21 is similar to the near eye display 21 of Figs. 6A and 7A. Corresponding reference numerals are used for corresponding features.

The example near eye display 21 of Fig. 8A differs to the near eye display 21 of Figs. 6A and 7A because in Figs. 6A and 7A the front frame 47 of the near eye display 21 is flat whereas in Fig. 8A the front frame 47 of the near eye display 21 has a bend in the centre. In the examples of Figs. 6A and 7A the light guide 65 of the right hand side of the near eye display 21 is provided in line with the light guide 65 of the left hand side of the near eye display 21. This causes the beam of light emitted by the left hand side to be parallel or substantially parallel to the beam of light emitted by the right hand side.

Conversely in the example of Fig. 8A the light guide 65 of the right hand side of the near eye display 21 is provided at an angle to the light guide 65 of the left hand side of the near eye display 21. This causes the beams of light emitted by the left hand side to be at an angle to the beam of light emitted by the right hand side of the electronic device. The respective light guides 65 may be angled so that the beams of light are directed towards the eyes 63 of the user 41 when the user is viewing the internal display area 24 as indicated by the arrows 83. In some examples the light guides 65 may be adjustable to enable the directions of the beams of light to be adjusted for different users 41. This may provide for an efficient near eye display 21 however this may mean that the beams of light may be directed away from each other in the external display areas 25 as indicated by the arrows 85. In the examples of Figs. 8A to 8C the image source 23 may be controlled to adjust for the divergence of the beams of light from the external display area 25.

Fig. 8B illustrates an example of an image 81 which may be provided for the external display areas 25 by an image source 23 in a near eye display 21 with an angled front frame 47. The image 81 comprises a notification of messages received by the near eye display 21. In Fig. 8B the image 81 provided by the image source 21 is rotated horizontally so that it appears backwards. The image 81 is also provided in a different relative position compared to the image 71 of Fig. 7B. In the example of Fig. 7B the image 71 is provided in the centre. In the example of Fig. 8B the image 81 is provided toward the right hand side.

Fig. 8C illustrates how the image 81 may appear to a user 41 of the near eye display 21 when they are viewing the external display area 25. In this example the image 81 appears the right way round in the external display area 25 because this displays a 180 degree rotation of the image 81 provided by the image source 23. It is to be appreciated that the image 81 would appear back to front in the internal display area 24. The image also appears in focus and in the appropriate position on the external display area due to the formatting of the image 81 by the image source 23.

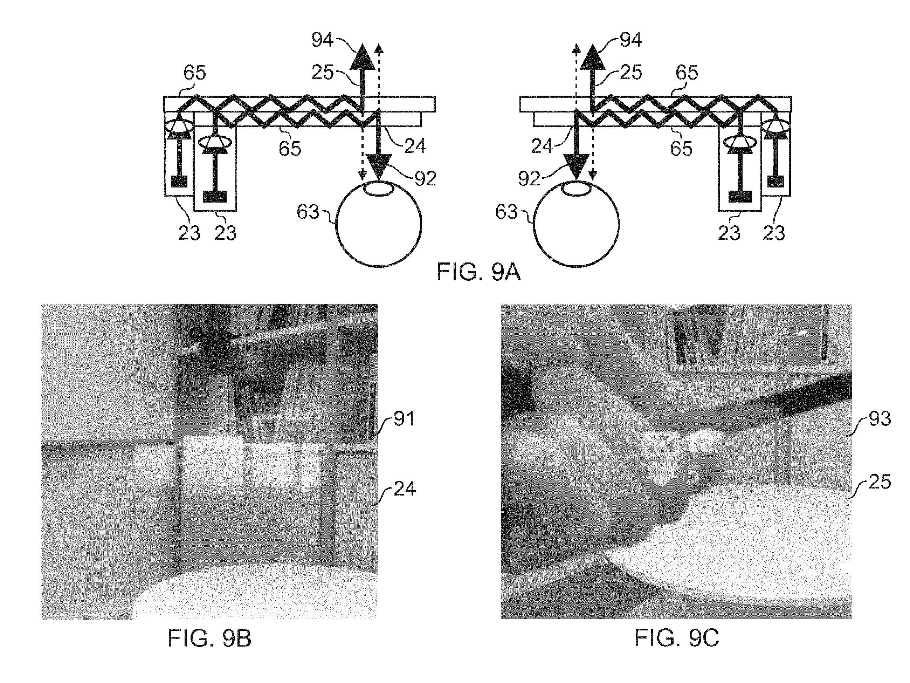

Figs. 9A to 9C illustrate another example near eye display 21 and the images 91 which may be provided by the image source 23 and viewed by the user 41. The example near eye display 21 of Figs. 9A to 9C enables different images to be provided to the internal display area 24 and the external display area 25.

Fig. 9A schematically illustrates components of a near eye display 21 which may be used in some examples of the disclosure. The near eye display 21 is similar to the electronic devices 21 of Figs. 6A and 7A. Corresponding reference numerals are used for corresponding features.

The example electronic device 21 of Fig. 9A differs to the electronic devices of Figs. 6A and 7A because in Figs. 6A and 7A a single image source 23 is provided for the internal display area 24 and the external display area 25 whereas in Fig. 9A two image sources 23 are provided. In the example near eye display 21 of Fig. 9A a first image source 23 provides images for the internal display area 24 as indicated by arrows 92 and a second image source 23 provides images for the external display area 25 as indicated by arrows 94. Two light guides 65 may also be provided so that a first light guide 65 is provided between the first image source in the internal display area 24 and a second light guide 65 is provided between the second image source 23 and the external display area 25. This may enable images to be displayed on the internal display area 24 independently of the images that are displayed on the external display area 25.

Fig. 9B illustrates an example image 91 that may be viewed in the internal display area 24. Fig. 9B illustrates how the image 91 may appear to the user 41 of the near eye display 21 when they are wearing the near eye display 21. The example image 91 comprises a list of applications which may be selected by the user of the near eye display 21. It is to be appreciated that other images may be displayed in other examples.

Fig. 9C illustrates an example image 93 that may be viewed in the external display area 25. Fig. 9C illustrates how the image 93 may appear to a user of the electronic device when they are viewing the external display area 25. In this example the image 93 comprises different information to the image which is displayed on the internal display area 24. In the particular example of Fig. 9C the image 93 for the external display area comprises a notification about messages that have been received.

The examples of Figs. 9A to 9C enable different images to be display on each of the display areas 24, 25. This may enable users 41 to view information on the internal display area 24 which cannot be viewed by other people. In some examples this may be used to provide information to other users around the user 41 wearing the near eye display 21. For instance it may provide an indication that the user 41 is currently performing another task.

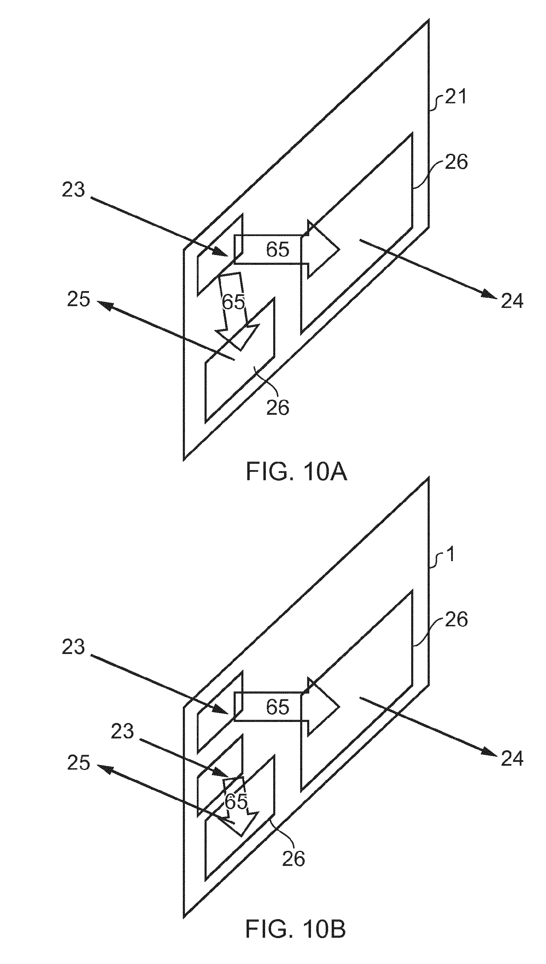

Figs. 10A and 10B schematically illustrates optical components within a near eye display 21 which may be used in some examples of the disclosure.

In the example of Fig. 10A only one image source 23 is provided. This may be configured to provide images for both the internal display area 24 and the external display area 25.

In the example of Fig. 10A different optical components are provided for the different display areas 24, 25. In Fig. 10A a first light guide 65 is provided to guide light from the image source 23 to a first optical projection element 26. The first optical projection element 26 may be configured to project images onto the internal display area 24. A second light guide 65 is provided to guide light from the image source 23 to a second optical projection element 26. The second optical projection element 26 may be configured to project images onto the external display area 25.

The different optical components may enable different amounts of light to be provided to the different display areas 24, 25. For instance in the example of Fig. 10A the first optical projection element 26 is larger than the second optical projection element 26. This may enable the internal display area 24 to be larger than the external display area 25.

In the example of Fig. 10B two image sources 23 are provided. This may enable images for the internal display area 24 to be provided independently of images provided for the external display area 25.

In the example of Fig. 10B different optical components are also provided for the different display areas 24, 25. In Fig. 10B a first light guide 65 is provided to guide light from the first image source 23 to a first optical projection element 26. The first optical projection element 26 may be configured to project images onto the internal display area. A second light guide 65 is provided to guide light from the second image source 23 to a second optical projection element 26. The second optical projection element 26 may be configured to project images onto the external display area 25.

As well as enabling different images to be provided the different optical components may also enable different amounts of light to be provided to the different display areas 24, 25 as described above with reference to Fig. 10A.

In some examples the different optical components may be configured with different optical properties. For instance the light guide 65 and the optical projection element 26 may be configured to provide coloured images to the internal display area 24. The other light guide 65 and the optical projection element 26 may be optimised for a single wavelength or range of wavelengths to enable monochromatic images to be provided on the external display area 25. This may provide for an efficient near eye display 21 which may be configured to display images on both an internal display area 24 and an external display area 25.

The blocks illustrated in the Fig. 3 do not necessarily imply that there is a required or preferred order for the blocks and the order and arrangement of the block may be varied. Furthermore, it may be possible for some blocks to be omitted.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although examples of the disclosure have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
processing circuitry; and
memory circuitry including computer program code, the memory circuitry and the computer program code configured to, with the processing circuitry, enable the apparatus to perform;
detecting whether or not a user is viewing an external display area or an internal display area;
controlling an image source to provide images for the internal display area in response to detecting that a user is viewing the internal display area: and
controlling an image source to provide images for the external display area in response to detecting that a user is viewing the external display area.

2. An apparatus as claimed in any preceding claim wherein the internal display area is configured to be positioned proximate to an eye of a user and the external display area is configured to be positioned on an opposing side of the apparatus to the internal display area.

3. An apparatus as claimed in any preceding claim wherein the processing circuitry and the memory circuitry are configured to control an image source to provide images in a first format for the internal display area and a second format for the external display area.

4. An apparatus as claimed in any preceding claim wherein the processing circuitry and the memory circuitry are configured to control an image source to provide images in a first orientation for display on the internal display area and a second orientation for display on the external display area.

5. An apparatus as claimed in any preceding claim wherein the processing circuitry and the memory circuitry are configured to control an image source to provide images with a first convergence point for display on the internal display area and a second convergence point for display on the external display area.

6. An apparatus as claimed in any preceding claim wherein the processing circuitry and the memory circuitry are configured to control a first image source to provide first images for the internal display area and to control a second image source to provide second images for the external display area.

7. An apparatus as claimed in any preceding claim wherein the image which is displayed in the external display area is displayed in a low energy mode.

8. An apparatus as claimed in any preceding claim wherein the processing circuitry and the memory circuitry are configured to obtain user input signals and control the images provided by the image sources in response to the obtained user input signals.

9. A near eye display comprising an apparatus as claimed in any of claims 1 to 8.

10. A method comprising:
detecting whether or not a user is viewing an external display area or an internal display area;
controlling an image source to provide images for the internal display area in response to detecting that a user is viewing the internal display area: and
controlling an image source to provide images for the external display area in response to detecting that a user is viewing the external display area.

11. A method as claimed in claim 10 wherein the internal display area is configured to be positioned proximate to an eye of a user and the external display area is configured to be positioned on an opposing side of an apparatus to the internal display area.

12. A method as claimed in any of claims 10 to 11 further comprising controlling an image source to provide images in a first format for the internal display area and a second format for the external display area.

13. A method as claimed in any of claims 10 to 12 further comprising controlling an image source to provide images in a first orientation for display on the internal display area and a second orientation for display on the external display area.

14. A method as claimed in any of claims 10 to 13 further comprising controlling an image source to provide images with a first convergence point for display on the internal display area and a second convergence point for display on the external display area.

15. A computer program comprising computer program instructions that, when executed by processing circuitry, enable:
detecting whether or not a user is viewing an external display area or an internal display area;
controlling an image source to provide images for the internal display area in response to detecting that a user is viewing the internal display area: and
controlling an image source to provide images for the external display area in response to detecting that a user is viewing the external display area.
